# EUROPÄISCHE PATENTSCHRIFT

(11) **EP 2 528 796 B1**
(45) Veröffentlichungstag und Bekanntmachung des Hinweises auf die Patenterteilung: **01.03.2017**
(21) Anmeldenummer: 10784757.6
(22) Anmeldetag: 23.11.2010
(51) Int. Cl.: B61F 5/50

(54) **TRÄGERPLATTE MIT SCHRAUBBEFESTIGUNG**
SUPPORT PLATE WITH SCREW MOUNTING
PLAQUE DE SUPPORT PRÉSENTANT UNE FIXATION PAR VIS

(30) Priorität: 27.01.2010 DE 102010000217
(43) Veröffentlichungstag der Anmeldung: 05.12.2012
(73) Patentinhaber: ContiTech Luftfedersysteme GmbH, 30165 Hannover (DE)
(72) Erfinder: SANZ, Andre, 21077 Hamburg (DE); PETUCHOW, Arthur, 22419 Hamburg (DE)
(74) Vertreter: Kilsch, Armin Ralph
(86) Internationale Anmeldenummer: PCT/EP2010/067996
(87) Internationale Veröffentlichungsnummer: WO 2011/091884

(56) Entgegenhaltungen:
- CA-A1- 2 287 668
- DE-A1- 19 535 537
- FR-A1- 2 895 291
- US-A- 3 861 774

## Beschreibung

Die Erfindung betrifft ein Feder- oder Dämpfungselement zwischen ungefederter und gefederter Masse eines Schienenfahrzeugs mit einer Trägerplatte und einem Gewindeelement zur Verschraubung vom an der Trägerplatte befestigten Feder- oder Dämpfungselement an Schienefahrzeugen, wobei das Feder- oder Dämpfungselement mit einer auf einer Seite einer Trägerplatte anvulkanisierten Gummifeder oder Gummi-Metallfeder versehen ist, wobei die Trägerplatte mit einer Bohrung versehen ist, durch die das Gewinde dem als Norm-Schraube ausgebildeten Gewindeelement mit Schraubenkopf und Außengewinde so hindurch ragt, dass der Schraubenkopf auf der Seite der anvulkanisierten Gummifeder an der Trägerplatte anliegt und von der Gummifeder verdeckt und umgeben ist.

Gattungsgemäße Feder- oder Dämpfungselemente mit Trägerplatten werden normalerweise aus Metall hergestellt und bei Schienenfahrzeugen genutzt, um Federelemente oder Feder-Dämpfungselemente zwischen ungefederter und gefederter Masse zu befestigen oder allgemein Puffer zwischen zwei Massen anzuordnen oder an einer Masse zu fixieren. Solche federnden oder dämpfenden Elemente bestehen oft aus Gummifedern, Gummi-Metallfedern oder eine Kombination aus Federn und Dämpfern.

Die bisher gefertigten Bauteile dieser Art, die eine mit einer Trägerplatte verbundene Schraube aufweisen, beinhalten üblicherweise eine Schweißnaht am Schraubenkopf, wodurch die Schraube gegen Verdrehung und gegen axiales Verschieben gesichert wird. Die entsprechenden Vorschriften für das Schweißen von und an Schienenfahrzeugen und Fahrzeugteilen von Schienenfahrzeugen schreiben eine bestimmte Schweißeignung der beteiligten Werkstoffe vor. So muss auch der Werkstoff der zu verschweißenden Schraube die Anforderungen an diese Materialien erfüllen und eine normiert nachgewiesene Schweißeignung besitzen. Dies ist bei den für solche Anwendungen üblichen Werkstoffen von höherfesten Schrauben, nämlich Schrauben der Festigkeitsklasse 8.8 oder höher nicht gegeben. Somit besteht ein Problem darin, dass alle Einrichtungen des Bauteils einerseits Schweißgeeignet sein müssen, andererseits Schrauben mit bestimmten höheren Festigkeitsklassen besser und in passenderen Dimensionen eingesetzt werden sollen.

Die US 3 861 774 A offenbart eine Befestigungsmöglichkeit von Erdungsleitungen für Elektroeinrichtungen in Flugzeugen und weist eine nur für weichere Metalle und/oder im Leichtbau geeignete und durchführbare Umformung eines Blechteiles um einen Schraubenkopf auf. Die bei einem Feder- oder Dämpfungselement zwischen ungefederter und gefederter Masse eines Schienenfahrzeugs auftretenden Kräfte könne damit nicht aufgefangen werden.

Für die Erfindung bestand daher die Aufgabe, eine Trägerplatte bereit zu stellen, die einerseits in Bezug auf Verdrehung und axialer Fixierung des an der Trägerplatte vorzusehenden Gewindeelements gleiche Sicherheiten wie bei einer stoffschlüssige Schweißverbindung aufweist, andererseits aus preiswerten Normteilen einfach und sicher unter Erfüllung aller Normen und Vorschriften hergestellt werden kann.

Gelöst wird diese Aufgabe durch die Merkmale des Hauptanspruchs. Weitere vorteilhafte Ausbildungen sind in den Unteransprüchen offenbart.

Dabei weist die Trägerplatte im Bereich der Bohrung eine erhabene und zum Schraubenkopf vorspringende Prägung auf, die an Teilen des Außenumfang des Schraubenkopfes formschlüssig anliegt und diesen damit so umgibt, dass eine Verdrehung der Schraube verhindert ist. Damit kann durch eine zum Schweißen alternative Fertigung ein sicherer Formschluss in Bezug auf Verdrehung hergestellt werden.

Eine vorteilhafte, weil besonders einfache Weiterbildung besteht darin, dass der Kopf der Normschraube ein Sechskant ist und gegenüberliegende Prägungen an zwei zur Schraubenachse parallelen Flächen des Sechskants formschlüssig anliegen. Dies erlaubt die Nutzung einfachster Normteile und führt somit zu einer weiteren Kostenreduzierung. Eine weitere vorteilhafte Ausbildung besteht darin, dass die Schraube durch eine nach ihrem Einsetzen in die Trägerplatte durchgeführte und zur radialen Verengung des Bohrloches dienende Umformung von Trägerplattenmaterial fixiert ist. Dabei erreicht man mit einfachen Verformungsvorgängen bzw. Umformungsvorgängen eine sichere Fixierung auch in axialer Richtung. Dies kann weiter verbessert werden dadurch, dass die Schraube schaftlos ausgebildet und Trägerplattenmaterial durch eine nach dem Einsetzen der Schraube angebrachte radiale Verengung des Bohrloches in die Gewindegänge eingedrückt ist. Schaftlos heißt hier, dass die Gewindegänge bis nahe an den Schraubenkopf heranreichen.

Ein besonders geeignetes Werkzeug zur Herstellung einer Trägerplatte, bei der das Trägerplattenmaterial durch eine nach dem Einsetzen der Schraube angebrachte radiale Verengung des Bohrloches in die Gewindegänge eingedrückt wird, ist ausgebildet als das Schraubengewinde mit Abstand umfassender zylindrischer Hohlstempel, versehen mit einer zur Trägerplatte weisenden und um die Bohrung an der Trägerplatte anliegenden doppelt konischen Stempelschneide.

Anhand eines Ausführungsbeispieles soll die Erfindung näher erläutert werden. Es zeigen
- Fig. 1: eine zu einem erfindungsgemäßen Feder- oder Dämpfungselement gehörige Trägerplatte mit Gewindeelement
- Fig. 2: die Ausbildung der Prägungen in der Trägerplatte
- Fig. 3: die Trägerplatte 1 gemäß Fig. 1 mit eingesetzter Schraube in der Draufsicht
- Fig. 4: die Trägerplatte gemäß Fig. 1 mit anvulkanisiertem Gummi- bzw. Gummi-Metallelement
- Fig. 5: ein Werkzeug für ein Fügeverfahren zur Herstellung eines axialen Formschlusses in einer erfindungsgemäßen Trägerplatte
- Fig. 6: eine Trägerplatte eines Feder- oder Dämpfungselementes aus dem Stand der Technik

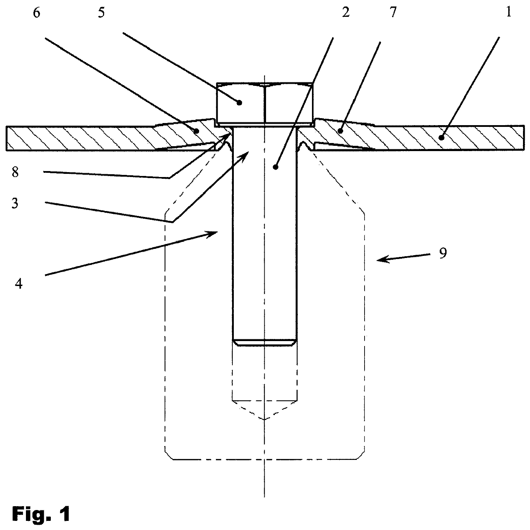

Die Fig. 1 zeigt zu einem erfindungsgemäßen Feder- oder Dämpfungselement gehörige Trägerplatte 1 mit Gewindeelement zur Verschraubung von an der Trägerplatte befestigten Zubehörteilen an Schienenfahrzeugen, wobei das Gewindeelement als mit der Trägerplatte verbunden Norm-Schraube 2 ausgebildet ist.

Die Trägerplatte 1 mit einer Bohrung 3 versehen ist, durch die das Gewinde 4 der Norm-Schraube so hindurch ragt, dass der Schraubenkopf 5 auf einer Seite der Trägerplatte anliegt.

Die Trägerplatte 1 weist im Bereich der Bohrung 3 eine erhabene und zum Schraubenkopf vorspringende Prägungen 6 und 7 auf, die an Teilen des Außenumfang des Schraubenkopfes formschlüssig anliegen und damit diesen so umgibt, dass eine Verdrehung der Schraube 2 verhindert ist. Der Kopf 5 der Norm-Schraube 2 ist ein Sechskant und die gegenüberliegende Prägungen 6 und 7 liegen an zwei zur Schraubenachse parallelen Flächen des Sechskants formschlüssig an.

Die Schraube 2 ist schaftlos ausgebildet, wobei und im Bereich 8 Trägerplattenmaterial durch eine nach dem Einsetzen der Schraube angebrachte radiale Verengung des Bohrloches in die Gewindegänge eingedrückt ist. Fig. 1 zeigt hierzu andeutungsweise und strichpunktiert das erforderliche Werkzeug 9, welches später noch beschrieben ist.

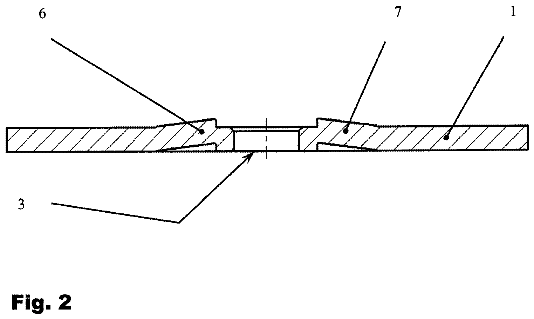

Fig. 2 zeigt noch einmal deutlich die Ausbildung der Prägungen 6 und 7 als neben dem Schraubenkopf 5 angeordnete und im Querschnitt gesehen schräg zu letzterem ansteigende Erhöhungen, welche an der formschlüssig anliegenden Grenzfläche bzw. Umfangsfläche des Sechskant-Schraubenkopfes etwa auf die Höhe der Oberfläche der Trägerplatte zurückspringen. Dies erlaubt eine besonders einfache Fertigung durch rechteckige Stempel mit entsprechend einfacher schräg ausgebildeter Stempelfläche.

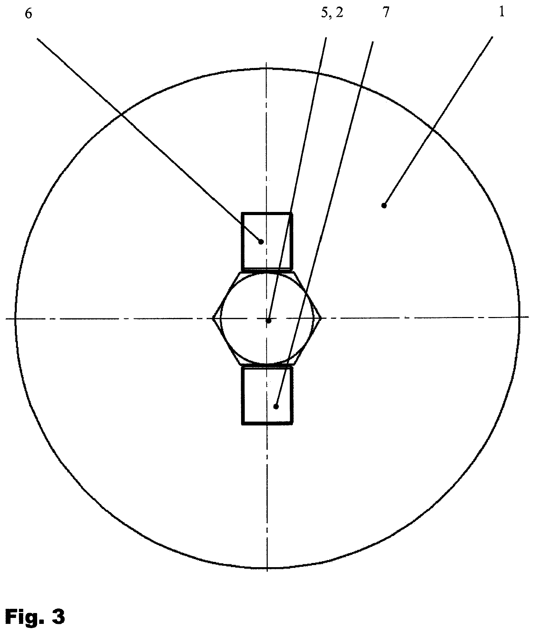

Fig. 3 zeigt die Trägerplatte 1 gemäß Fig. 1 mit eingesetzter Schraube in der Draufsicht, jedoch noch ohne anvulkanisiertes Gummi, Polyurethan oder Gummi-Metallelement. Hier wird noch einmal deutlich, auf welche Weise die Prägungen 6 und 7 an den zur Schraubenachse parallelen Flächen des Sechskants-Schraubenkopfes 5 formschlüssig anliegen.

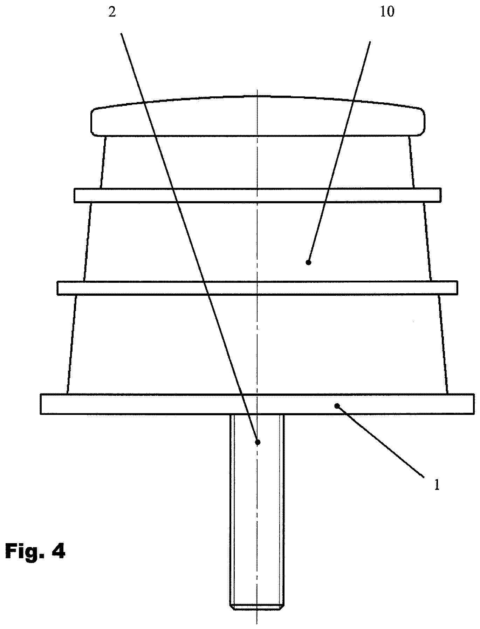

Fig. 4 zeigt die Trägerplatte gemäß Fig. 1 mit dem anvulkanisierten Feder- oder Dämpfungselement 10, welches hier zusammengesetzt ist aus Gummi und Metallelementen. Der Schraubenkopf ist nicht mehr sichtbar und vom Feder- oder Dämpfungselement 10 verdeckt und umgeben. Das Feder- oder Dämpfungselement kann natürlich auch bereits vorgefertigt sein oder auch aus anderen elastomeren Werkstoffen oder damit verbundenen Elementen bestehen.

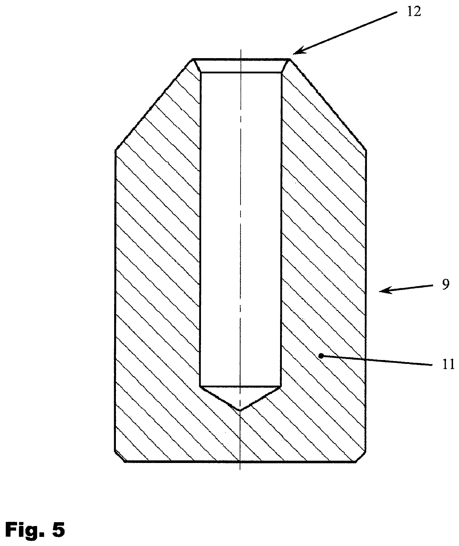

Fig. 5 zeigt das Werkzeug 9 zur Durchführung eines Fügevorganges zur Herstellung eines axialen Formschlusses, nämlich einer zur radialen Verengung des Bohrloches dienende Umformung von Trägerplattenmaterial, bei der das Trägerplattenmaterial im Bereich 8 durch eine nach dem Einsetzen der Schraube durchgeführte radiale Verengung des Bohrloches in die Gewindegänge eingedrückt wird. Das Werkzeug 9 ist ausgebildet als ein das Schraubengewinde mit Abstand umfassender zylindrischer Hohlstempel 11, der mit einer zur Trägerplatte weisenden und um die Bohrung an der Trägerplatte anliegenden doppelt konischen Stempelschneide 12 versehen ist. Durch den bei der Verformungsstempelung entstehend Druck der doppelt konischen Stempelschneide 12 auf die Unterseite der Trägerplatte 1 verschiebt bzw. verformt sich das im Bereich 8 befindliche Trägerplattenmaterial in der Bohrungswandung und dringt in die Gewindegänge ein. Fig. 1 zeigt andeutungsweise und strichpunktiert, wie das Werkzeug 9 angesetzt wird und wo es nach der Stempelung/ nach dem Verformungsvorgang sich befindet.

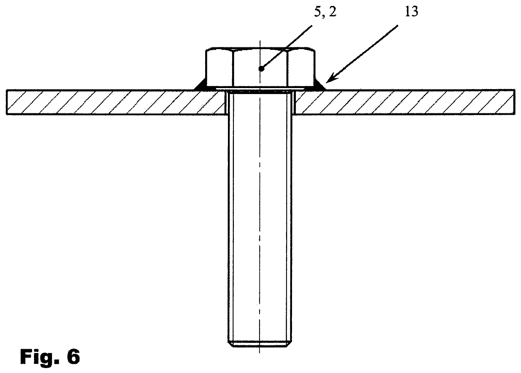

Fig. 6 zeigt noch einmal zum Vergleich eine mit einer Schweißnaht 13 zur Fixierung versehen Ausführung einer Trägerplatte eines Feder- oder Dämpfungselementes, wie sie früher üblich war.

### Bezugszeichenliste

### (Teil der Beschreibung)

- **1**: Trägerplatte
- **2**: Norm-Schraube
- **3**: Bohrung
- **4**: Gewinde
- **5**: Schraubenkopf
- **6**: Prägung
- **7**: Prägung
- **8**: Bereich der radialen Verengung/ Verformung
- **9**: Werkzeug
- **10**: Federelement
- **11**: Hohlstempel
- **12**: Doppelt konische Stempelschneide
- **13**: Schweißnaht

## Patentansprüche

1. Feder- oder Dämpfungselement (10) zwischen ungefederter und gefederter Masse eines Schienenfahrzeugs mit einer Trägerplatte (1) und einem Gewindeelement zur Verschraubung vom an der Trägerplatte (1) befestigten Feder- oder Dämpfungselement (10) an Schienenfahrzeugen, wobei das Feder- oder Dämpfungselement (10) mit einer auf einer Seite einer Trägerplatte (1) anvulkanisierten Gummifeder oder Gummi-Metallfeder versehen ist, wobei die Trägerplatte (1) mit einer Bohrung (3) versehen ist, durch die das Gewinde (4) dem als Norm-Schraube (2) ausgebildeten Gewindeelement mit Schraubenkopf und Außengewinde so hindurch ragt, dass der Schraubenkopf (5) auf der Seite der anvulkanisierten Gummifeder an der Trägerplatte (1) anliegt und von der Gummifeder verdeckt und umgeben ist, **dadurch gekennzeichnet, dass** die Trägerplatte (1) im Bereich der Bohrung (3) eine erhabene und zum Schraubenkopf (5) vorspringende Prägung (6, 7) aufweist, die an Teilen des Außenumfang des Schraubenkopfes (5) formschlüssig anliegt.

2. Feder- oder Dämpfungselement nach Anspruch 1, bei der der Kopf (5) der Normschraube ein Sechskant ist und gegenüberliegende Prägungen (6, 7) an zwei zur Schraubenachse parallelen Flächen des Sechskants formschlüssig anliegen.

3. Feder- oder Dämpfungselement nach Anspruch 1 oder 2, bei der die Schraube (2) durch eine nach ihrem Einsetzen in die Trägerplatte durchgeführte und zur radialen Verengung des Bohrloches dienende Umformung von Trägerplattenmaterial (3) fixiert ist.

4. Feder- oder Dämpfungselement nach Anspruch 3, bei der die Schraube (2) schaftlos ausgebildet und Trägerplattenmaterial durch eine nach dem Einsetzen der Schraube angebrachte radiale Verengung des Bohrloches (3) in die Gewindegänge eingedrückt ist.

5. Feder- oder Dämpfungselement nach einem der Ansprüche 2 bis 4, bei der die Prägung (6, 7) als neben dem Schraubenkopf (5) angeordnete schräg zu letzterem ansteigende Erhöhung ausgebildet ist, welche an der formschlüssig anliegenden Grenzfläche des Schraubenkopfes auf die Höhe der Oberfläche der Trägerplatte (1) zurückspringt.

## Claims

1. Spring or damping element (10) between an unsprung mass and a sprung mass of a rail vehicle, having a carrier plate (1) and having a threaded element for the screw connection of the spring or damping element (10), which is fastened to the carrier plate (1), to rail vehicles, wherein the spring or damping element (10) is equipped with a rubber spring or rubber-metal spring vulcanized on on one side of a carrier plate (1), wherein the carrier plate (1) is equipped with a bore (3) through which the thread (4) extends through the threaded element, in the form of a standardized screw (2) with screw head and external thread, such that the screw head (5) bears against the carrier plate (1) on the side of the vulcanized-on rubber spring and is covered and surrounded by the rubber spring, **characterized in that** the carrier plate (1) has, in the region of the bore (3), an elevated embossment (6, 7) which projects toward the screw head (5) and which bears in form-fitting fashion against parts of the outer circumference of the screw head (5).

2. Spring or damping element according to Claim 1, in which the head (5) of the standardized screw is a hexagon, and oppositely situated embossments (6, 7) bear in form-fitting fashion against two surfaces, which are parallel to the screw axis, of the hexagon.

3. Spring or damping element according to Claim 1 or 2, in which the screw (2) is fixed by way of a deformation, which is performed after the insertion of said screw into the carrier plate and which serves for radially constricting the borehole, of carrier plate material (3).

4. Spring or damping element according to Claim 3, in which the screw (2) is formed without a shank, and carrier plate material is forced into the thread turns by way of a radial constriction of the borehole (3) performed after the insertion of the screw.

5. Spring or damping element according to one of Claims 2 to 4, in which the embossment (6, 7) is in the form of an elevation which is arranged adjacent to the screw head (5) and which rises obliquely with respect to the latter and which, at the boundary surface, which abuts in form-fitting fashion, of the screw head, is recessed to the height of the surface of the carrier plate (1).

## Revendications

1. Elément de suspension ou d'amortissement (10) entre une masse non suspendue et une masse suspendue d'un véhicule ferroviaire avec une plaque de support (1) et un élément fileté pour visser l'élément de suspension ou d'amortissement (10) fixé à la plaque de support (1) à des véhicules ferroviaires, dans lequel l'élément de suspension ou d'amortissement (10) est muni d'un ressort en caoutchouc ou d'un ressort en caoutchouc-métal vulcanisé sur un côté d'une plaque de support (1), dans lequel la plaque de support (1) est percée d'un trou (3), à travers lequel le filet (4) de l'élément fileté constitué par une vis normalisée (2) avec une tête de vis et un filet extérieur s'engage de telle manière que la tête de vis (5) s'applique sur la plaque de support (1) sur le côté du ressort en caoutchouc vulcanisé et soit recouverte et entourée par le ressort en caoutchouc, caractérisé en que la plaque de support (1) présente dans la région du trou (3) une empreinte (6, 7) surélevée et saillante vers la tête de vis (5), qui s'applique par emboîtement sur des parties du contour extérieur de la tête de vis (5).

2. Elément de suspension ou d'amortissement selon la revendication 1, dans lequel la tête (5) de la vis normalisée est hexagonale et des empreintes opposées (6, 7) s'appliquent par emboîtement sur deux- faces de la tête hexagonale parallèles à l'axe de la vis.

3. Elément de suspension ou d'amortissement selon la revendication 1 ou 2, dans lequel la vis (2) est immobilisée par une déformation du matériau (3) de la plaque de support exécutée après son introduction dans la plaque de support et opérant un rétrécissement radial du trou percé.

4. Elément de suspension ou d'amortissement selon la revendication 3, dans lequel la vis (2) est formée sans tige et du matériau de la plaque de support est refoulé dans les pas du filet par un rétrécissement radial du trou percé (3) exécuté après l'introduction de la vis.

5. Elément de suspension ou d'amortissement selon l'une quelconque des revendications 2 à 4, dans lequel l'empreinte (6, 7) est réalisée sous la forme d'une surélévation située à côté de la tête de vis (5) et montant en oblique vers cette dernière, et qui forme un retrait à la face limite de la tête de vis appliquée par emboîtement jusqu'à la hauteur de la surface de la plaque de support (1).
